# EUROPEAN PATENT SPECIFICATION

(11) **EP 1 762 479 B1**
(45) Date of publication and mention of the grant of the patent: **11.08.2010**
(21) Application number: 05741441.9
(22) Date of filing: 20.05.2005
(51) Int. Cl.: B62K 11/02, B62K 11/04, B62K 19/12

(54) **TWO-WHEELED MOTOR VEHICLE**
ZWEIRÄDRIGES KRAFTFAHRZEUG
VÉHICULE À MOTEUR À DEUX ROUES

(30) Priority: 30.06.2004 JP 2004194534
(43) Date of publication of application: 14.03.2007
(73) Proprietor: Yamaha Hatsudoki Kabushiki Kaisha, Iwata-shi, Shizuoka 438-8501 (JP)
(72) Inventor: KAWASE, Masao, YAMAHA HATSUDOKI KABUSHIKI KAISHA, Iwata-shi Shizuoka 438-8501 (JP)
(74) Representative: Harris, Ian Richard
(86) International application number: PCT/JP2005/009264
(87) International publication number: WO 2006/003759

(56) References cited:
- WO-A1-03/057552
- FR-A- 2 783 230
- JP-A- 1 309 801
- JP-A- 2 246 890
- JP-A- 8 324 476
- JP-A- 11 129 966
- JP-A- 11 263 270
- JP-A- 2001 278 159

## Description

### Background

The present invention relates to a motorcycle, in which a frame member constituting a vehicle body frame is formed and divided into a half on a left side of a vehicle body and a half on a right side of the vehicle body to be joined to each other by means of at least one clamp member.

A vehicle body frame for a conventional motorcycle is disclosed in, for example, JP-B-6-86231. With the vehicle body frame shown in the publication, the frame member is formed by casting and there are no welded parts, so that an outward appearance is not marred and reduction in manufacturing cost can be achieved.

The frame member is of a so-called diamond type to comprise a half on a left side of a vehicle body and a half on a right side of the vehicle body, which halves are molded by die casting. The both halves, respectively, comprise a head pipe part that holds a head pipe, a main frame extending rearwardly downwardly of the head pipe part, rear arm brackets extending downward from a rear end of the main frame, and an engine support stay projecting downward from midway the main frame. Also, the both halves are clamped by bolts in a mutually overlapping state to be thereby assembled.

The half on the left side of the vehicle body and the half on the right side of the vehicle body are joined together by joining clamp parts provided on the main frame by means of bolts and bridging a cross pipe in a region below rear arm supports on the pair of rear arm brackets.

A rear arm for support of a rear wheel is supported on the rear arm brackets to be able to swing vertically. The rear arm comprises a pair of left and right connection arms provided on a front end of the vehicle body. The connection arms, respectively, are arranged inwardly of the rear arm brackets on the vehicle body and supported on the rear arm brackets by means of a pivot shaft that extends in a left and right direction.

A conventional bolt joint type vehicle body frame shown in JP-B-6-86231 involves a problem of a decrease in stiffness as compared with a weld type vehicle body frame. In particular, when a rear arm exerts a force in a direction of twist on rear arm brackets, a rear end of a vehicle body is liable to be displaced in the direction. The reason why a conventional vehicle body frame is thus decreased in stiffness is that a part directly joining a half on a left side of a vehicle body and a half on a right side of the vehicle body is a main frame, and such joint part is upwardly and forwardly away from a rear arm support. While the both halves are joined to each other through a cross pipe disposed below the rear arm support, the rear arm support is decreased in support stiffness since they are joined through the cross pipe.

Therefore, a motorcycle formed with the use of the vehicle body frame structured and shown in JP-B-6-86231 needs to enhance the vehicle body frame stiffness, so that there is caused a disadvantage of degradation in running performance attributable to a weight of the vehicle body frame.

FR 2 783 230 discloses a motorcycle having a pivot frame. Attaching bosses of a crankcase are placed between portions of the pivot frame. Portions of a rear swing arm are arranged outwardly of the pivot frame.

The invention seeks to mitigate these problems and has as an object to provide a motorcycle that maintains a vehicle body frame stiffness while enabling a light construction and achieving a improved outward appearance and reduced cost.

### Summary

A motorcycle according to the invention is defined in claim 1. It comprises rear arm brackets comprising a left rear arm bracket and a right rear arm bracket, the left rear arm bracket and the right rear arm bracket being clamped together at respective mating surfaces by at least one clamp member, a left rear arm body pivotally supported on the left rear arm bracket, a right rear arm body pivotally supported on the right rear arm bracket, a pivot shaft supported by the left rear arm bracket and the right rear arm bracket to journal the left rear arm body and the right rear arm body. The left rear arm body is arranged outside the left rear arm bracket in a direction of vehicle breadth, the right rear arm body is arranged outside the right rear arm bracket in the direction of vehicle breadth and the left rear arm bracket and the right rear arm bracket are joined together in the vicinity of the pivot shaft.

As described above, according to the invention, as compared with the case where the rear arm brackets are positioned outside the rear arm bodies, those parts of the left and right rear arm brackets, which pivotally support the rear arm bodies, can be made close to each other in a direction of vehicle breadth to enhance joints thereof in stiffness. Therefore, while a construction is adopted, in which the pair of left and right rear arm brackets are joined to each other by means of at least one clamping member (e.g., bolts), it is possible to firmly support the rear arm. As a result, it is possible in an embodiment of the invention to realize a motorcycle, in which the rear arm brackets are formed by casting whereby the vehicle body frame can be made lightweight while manufacturing cost is held down.

In an example embodiment of the invention described in claim 2 and an example embodiment of the invention described in claim 3, the rear arm can be enhanced in support stiffness.

In an example embodiment of the invention described in claim 4, a bearing part of the rear arm can be improved in dust resistance.

In an example embodiment of the invention described in claim 5, a load attributable to input from a side of the rear arm and tending to shift the mating surfaces from each other is lessened by the pivot shaft, so that the mating surfaces are hard to shift from each other, thus enabling firmly supporting the rear arm.

In example embodiments of the invention described in claims to 7, the frame member extending from the head pipe part to the rear arm brackets can be formed without welding, so that a motorcycle having a high running performance can provided at low cost.

In an example embodiment of invention described in claim 9, by connecting an engine to the pair of left and right frame members, respectively, it is possible to have the engine functioning as a cross member for reinforcement. Therefore, it is possible in an embodiment of the invention to enhance the vehicle body frame in stiffness.

In an example embodiment of the invention described in claim 10, the pair of left and right frame members can be reinforced by the downtube, so that it is possible to further enhance the vehicle body frame in stiffness.

In an example embodiment of the invention described in claim 11, it is possible to function the downtube as a cross member interposed between the pair of left and right frame members. Therefore, a vehicle body frame having a high stiffness can be formed although a construction is adopted, in which the pair of left and right frame members are joined to each other by means of bolts.

In an example embodiment of the invention described in claim 12, one of the halves of the downtube can be formed by forging to have a high stiffness and brackets for mounting of the lower end of the engine and other parts can be easily formed on the other of the halves of the downtube. Therefore, it is possible in an embodiment of the invention to achieve an improvement of the vehicle body frame in stiffness and reduction in cost.

In an example embodiment of the invention described in claim 13, the front half of the downtube can posses stiffness, so that running is made stable.

In an example embodiment of the invention described in claim 14, the engine 10 can be firmly supported by a pair of parts, which are formed on the intermediate parts of the downtube to be wide in a direction of vehicle breadth.

In an example embodiment of the invention described in claim 15, the front half of the downtube can be formed lightweight while ensuring strength. Also, by passing a hose, a lead wire, etc. through a part of the front half having a C-shaped cross section, pebbles or the like, which is repelled by the front wheel, can be prevented from striking against these elements.

In an example embodiment of the invention described in claim 16, the front half of the downtube can be prevented from interfering with the exhaust pipe of the engine. Therefore, it is possible in an embodiment of the invention to bend and form the exhaust pipe with an ideal radius of curvature, so that the engine can be reduced in exhaust resistance.

### Brief description of the Drawings

Example embodiments of the invention are described hereinafter with reference to the accompanying drawings.
Fig. 1 is a side view showing an example embodiment of a motorcycle according to the invention.
Fig. 2 is a plan view showing the motorcycle of Figure 1.
Fig. 3 is a rear view showing the motorcycle of Figure 1.
Fig. 4 is a plan view showing a vehicle body frame used in the motorcycle of Figure 1.
Fig. 5 is a side view showing the vehicle body frame.
Fig. 6 is a side view showing a main frame member.
Fig. 7A is a side view showing a front half of a downtube.
Fig. 7B is a rear view showing the front half of a downtube.
Fig. 8A is a plan view showing a rear half of the downtube.
Fig. 8B is a side view showing the rear half of the downtube.
Fig. 9A is a plan view showing a rear frame.
Fig. 9B is a side view showing the rear frame.
Fig. 10 is a view showing, in enlarged scale, a head pipe part.
Fig. 11 is a cross sectional view along the line XI-XI in Fig. 6.
Fig. 12 is a cross sectional view of a head pipe half taken along the line XII-XII in Fig. 6.
Fig. 13 is a cross sectional view of the head pipe half taken along the line XIII-XIII in Fig. 6.
Fig. 14 is a cross sectional view of the head pipe half taken along the line XIV-XIV in Fig. 6.
Fig. 15 is a cross sectional view along the line XV-XV in Fig. 5.
Fig. 16 is a cross sectional view of a main frame member taken along the line XVI-XVI in Fig. 6.
Fig. 17 is a cross sectional view taken along the line XVII-XVII in Fig. 5.
Fig. 18 is a cross sectional view taken along the line XVIII-XVIII in Fig. 5.
Fig. 19 is a cross sectional view taken along the line XIX-XIX in Fig. 6.
Fig. 20 is a cross sectional view taken along the line XX-XX in Fig. 6.
Fig. 21 is a cross sectional view taken along the line XXI-XXI in Fig. 5.
Fig. 22 is a cross sectional view taken along the line XXII-XXII in Fig. 5.
Fig. 23 is a perspective sectional view showing the main frame member on a left side of the vehicle body.

### Description of Embodiments

An example embodiment of a motorcycle according to the invention will be described below in detail with reference to the drawings.

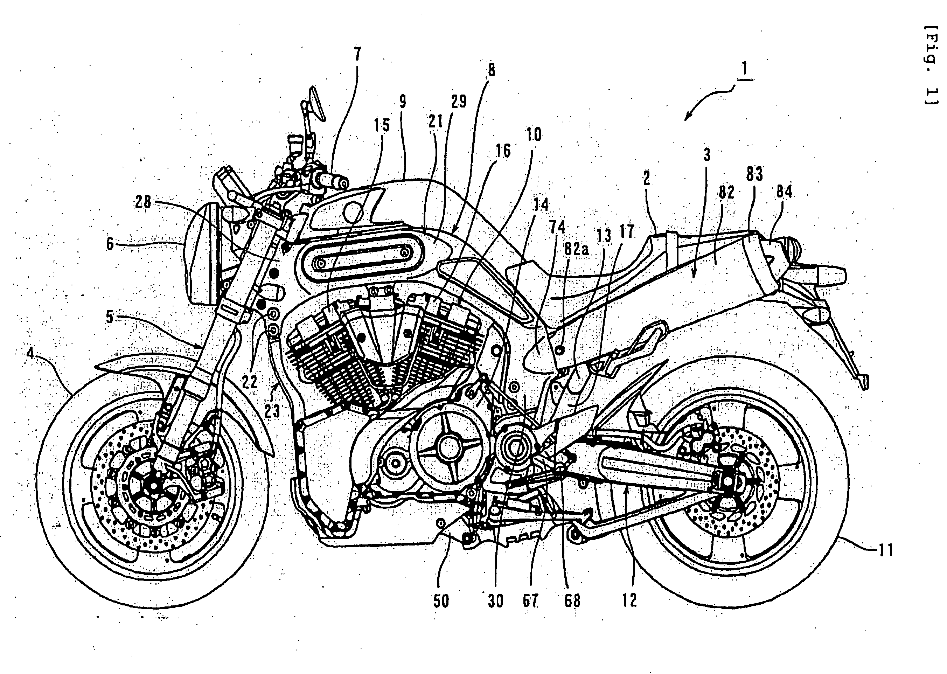

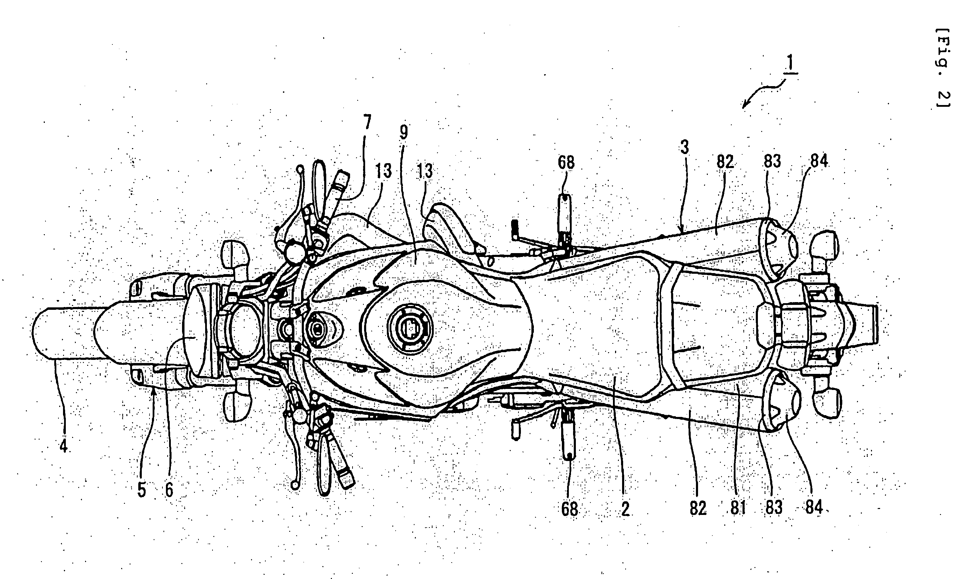

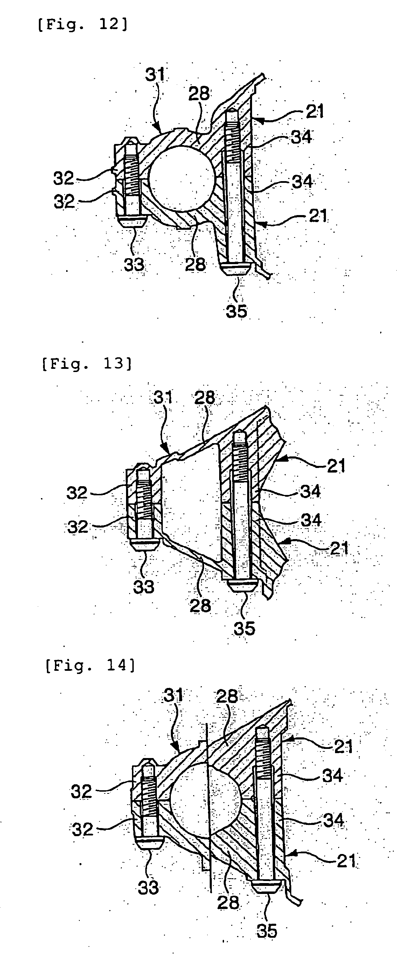

In Figs. 1 to 23, the reference numeral 1 denotes a motorcycle according to the embodiment. In the motorcycle 1, muffler covers 3 are arranged in positions of high level below sides of and close to a seat 2 to be conspicuous as viewed from laterally. The reference numeral 4 denotes a front wheel of the motorcycle 1, 5 a front fork, 6 a head light, 7 a steering handle, 8 a vehicle body frame, 9 a fuel tank, 10 an engine, 11 a rear wheel, 12 a rear arm, and 13 exhaust pipes. An engine 10 of the motorcycle 1 is an air-cooled V-type 2-cylinder engine, and comprises a cylinder 15 on a front side of a vehicle body and a cylinder 16 on a rear side of the vehicle body, which cylinders extend, as shown in Fig. 1, from an upper end of a crankcase 14 in a V-shaped configuration as viewed from laterally.

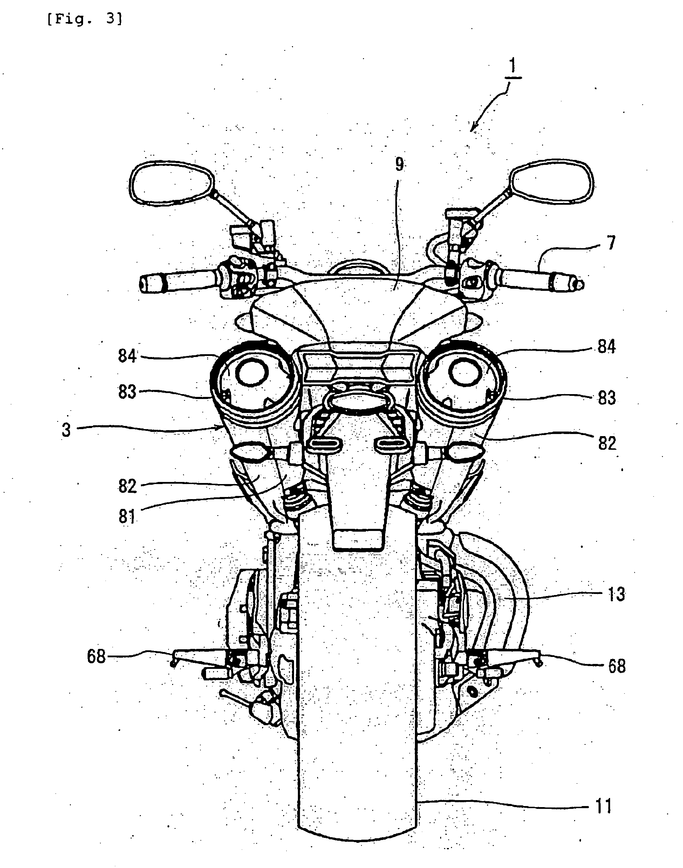

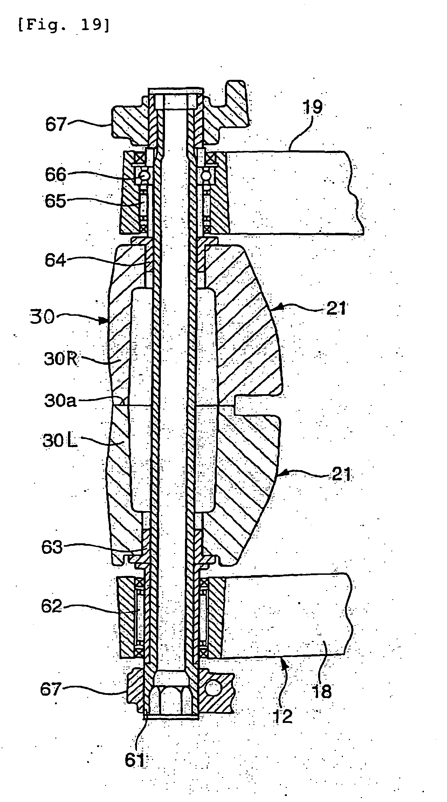

The exhaust pipes 13 of the engine 10 extend rightwardly of the vehicle body from the both cylinders 14, 15, respectively. The exhaust pipe 13 of the cylinder 15 on the front side of the vehicle body and the exhaust pipe 13 of the cylinder 16 on the rear side of the vehicle body are formed to extend downward on the right of the engine to be connected to a single collecting pipe 17 (see Fig. 1) rearwardly of the crankcase 14 as shown in Fig. 3. The collecting pipe 17 passes between a pair of left and right rear arm bodies 18, 19 (Fig. 19) on the rear arm 12 to extend upward in a space between a rear arm bracket described later and the rear wheel 11. A catalyst converter (not shown) is mounted midway the collecting pipe 17. An upper end of the collecting pipe 17 is formed in a bifurcate manner to be connected to a pair of left and right silencers (not shown) accommodated inside the muffler covers 3.

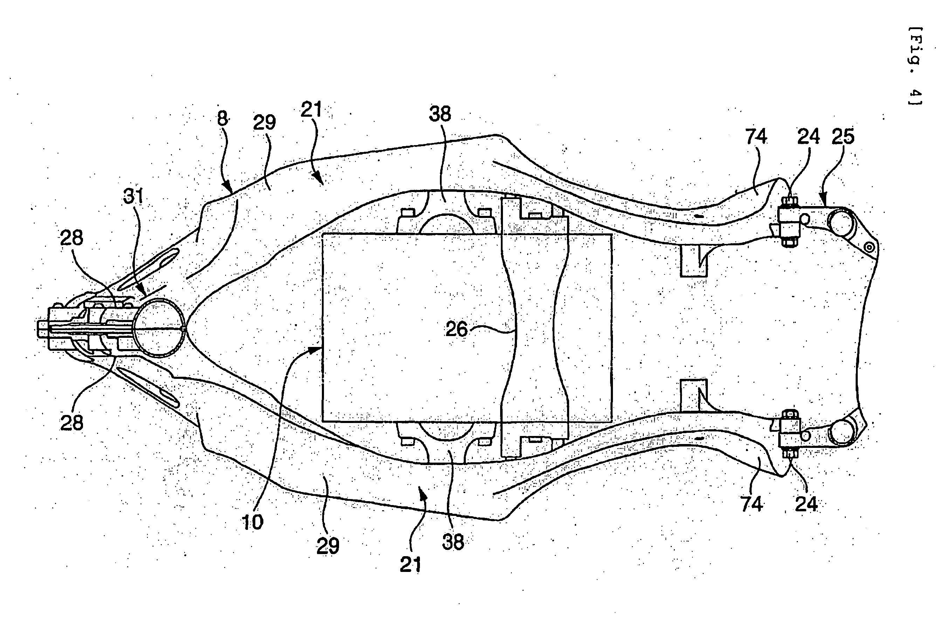

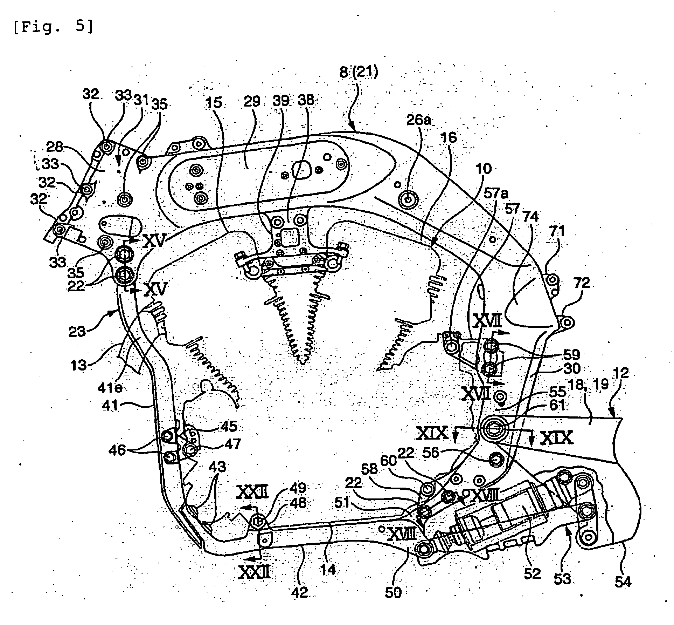

As shown in Figs. 4 and 5, the vehicle body frame 8 of the motorcycle 1 is a cradle type one to surround the engine 10 as viewed from laterally of the vehicle body by, and comprises a pair of left and right main frame members 21, 21 molded into a predetermined shape by casting, a downtube 23 joined to the main frame members 21 by joint bolts 22, a rear frame 25 joined to rear ends of the main frame members 21 by joint bolts 24 (see Fig. 4), and a cross member 26 bridged between intermediate parts of the main frame members 21. The main frame members 21 constitute a frame member in an embodiment of the invention. The main frame members 21 and the rear frame 25 are molded from an aluminum alloy material by die casting to have a predetermined shape.

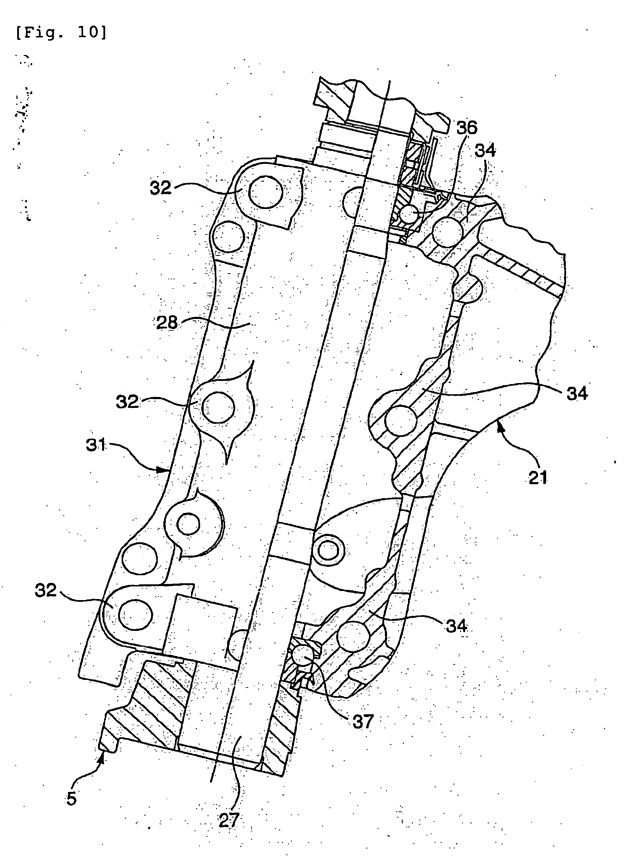

The main frame member 21 on a left side of the vehicle body and the main frame member 21 on a right side of the vehicle body, respectively, are formed integral with a head pipe half 28 that rotatably supports a steering shaft 27 (see Fig. 10) of the front fork 5, main frames 29 extending rearwardly of the vehicle body from the head pipe half 28, and a rear arm bracket 30 extending downward from the main frame 29 to support the rear arm 12. As shown in Fig. 19, the rear arm bracket 30 comprises a left rear arm bracket 30L positioned on the left side of the vehicle body and a right rear arm bracket 30R positioned on the right side of the vehicle body, which rear arm brackets are joined to each other by joint bolts 33 and joint bolts 35, both of which are described later.

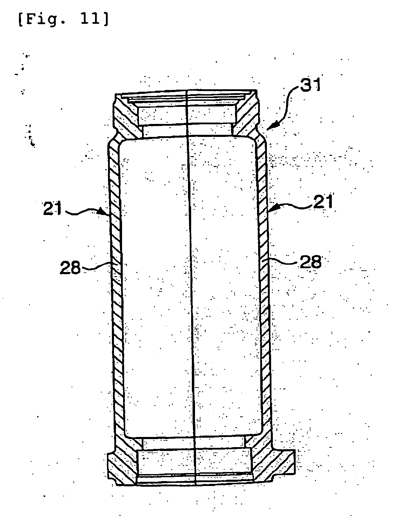

The head pipe half 28 is formed to have a U-shaped cross section diverging toward a center of the vehicle body in a left and right direction as shown in Figs. 11 to 14. That is, the head pipe half 28 is formed such that a left head pipe half and a right head pipe half are joined to each other to constitute a head pipe 31.

Both head pipe halves 28, 28 are joined by joining front clamp parts 32 provided in three locations at front ends of the both head pipe halves 28 by means of joint bolts 33 and joining rear clamp parts 34 provided in three locations at rear ends of the both head pipe halves 28 by means of joint bolts 35 as shown in Figs. 5, 10, and 23. The joint bolts 33 and the joint bolts 35 constitute a clamp member in an embodiment of the invention. When such joining work is conducted, bearings 36, 37 (see Fig. 10) for support of the steering shaft, respectively, are fitted into upper and lower ends of the head pipe 31 according to the embodiment.

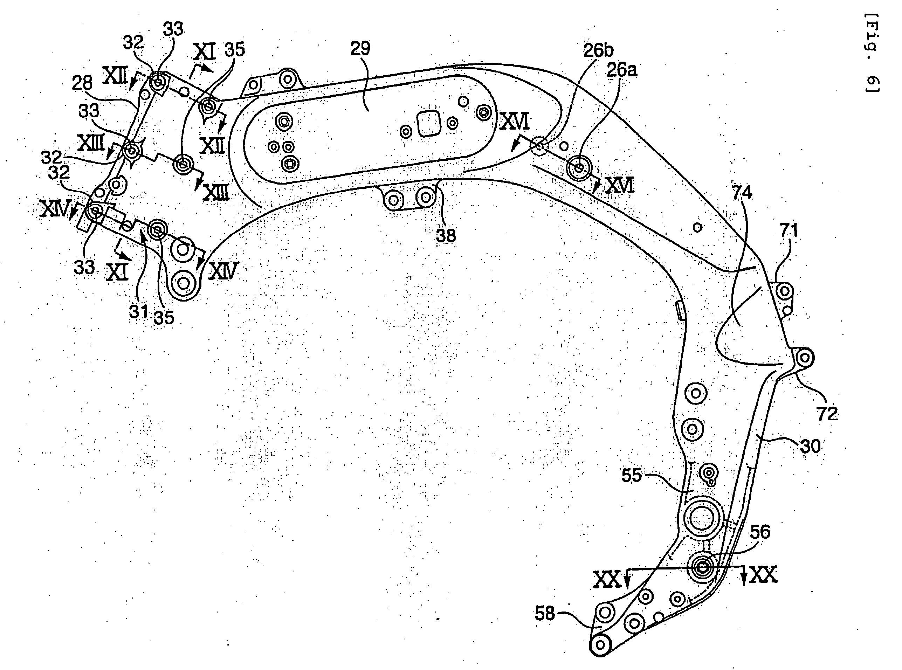

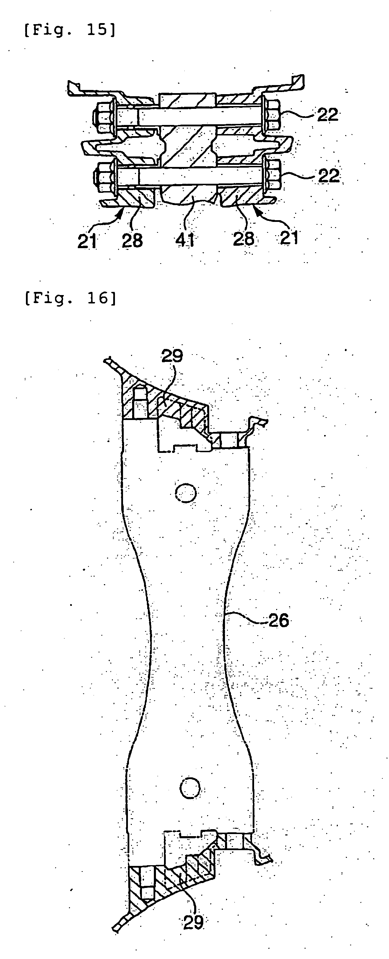

The main frames 29 are formed to have a C-shaped cross section opened toward the center of the vehicle body in the left and right direction and provided therein with a reinforcement rib (not shown). The main frame 29 of the main frame member 21 on the left side of the vehicle body and the main frame 29 of the main frame member 21 on the right side of the vehicle body are formed to separate from each other in the left and right direction of the vehicle body from the vicinity of and rearwardly of the head pipe part as shown in Fig. 4 and connected to each other by means of the cross member 26 (Figs. 4 and 16) . The cross member 26 is connected to the main frames 29 by fixing bolts 26a, 26b as shown in Fig. 6. As shown in Figs. 5 and 6, engine support brackets 38 projecting downward are formed integral with lower ends of the both main frames 29, 29. The engine support brackets 38 are connected to an upper end of the engine 10 via a stay 39 (see Fig. 5). That is, the pair of left and right main frames 29, 29 are connected to each other through the engine 10 and the stay 39. The fuel tank 9 is supported on and fixed to the main frames 29, 29.

As shown in Fig. 5, the downtube 23 comprises a front half 41 extending vertically in front of the engine 10, and a rear half 42 extending longitudinally below the engine 10. In addition, while the downtube 23 according to the embodiment is not formed from a tubular body, it is referred to a downtube in the specification of the present application since it has the same function as that of a downtube of a conventional cradle frame.

The front half 41 and the rear half 42 of the downtube 23 are joined to each other by means of joint bolts 43. An upper end of the front half 41 is joined to a lower end of the head pipe half 28 by means of joint bolts 22, and a rear end of the rear half 42 is joined to a lower end of the rear arm bracket 30 by means of joint bolts 22. Thus, by joining the downtube 23 to the head pipe half 28 and the rear arm bracket 30, the lower end of the head pipe half 28 and the lower end of the rear arm bracket 30 are connected to each other through the downtube 23. The vehicle body frame 8 according to the embodiment is constructed such that by removing the downtube 23 from the main frame members 21, a space is formed in the main frame members 21 to afford removing the engine 10 forwardly downward. That is, the motorcycle 1 enables mounting and dismounting the engine 10 together with the downtube 23 from the main frame members 21.

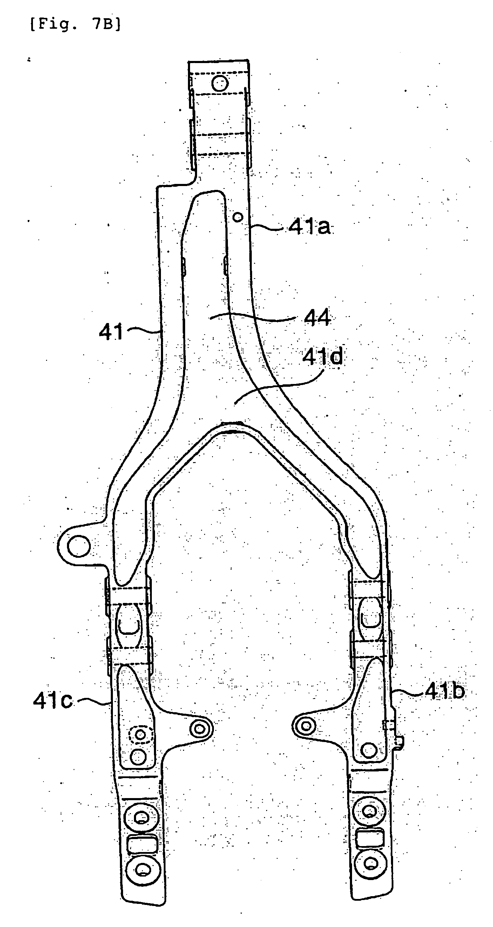

The front half 41 of the downtube 23 is molded into a predetermined shape by means of forging. The front half 41 is formed to have a shape substantially along a front edge of the engine 10 as shown in Figs. 1 and 5, and formed to bifurcate downward as shown in Fig. 7(b), as viewed from laterally of the vehicle body. In detail, the front half 41 is formed to be downward Y-shaped as viewed from rearwardly of the vehicle body to comprise a single upper part 41a and two lower parts 41b, 41c. The upper end of the front half 41 is interposed between the main frame member 21 (the head pipe half 28) on the left side of the vehicle body and the main frame member 21 (the head pipe half 28) on the right side of the vehicle body and clamped by the two joint bolts 22, 22 extending therethrough as shown in Fig. 15. That is, the upper end is interposed between the pair of left and right main frame members 21, 21.

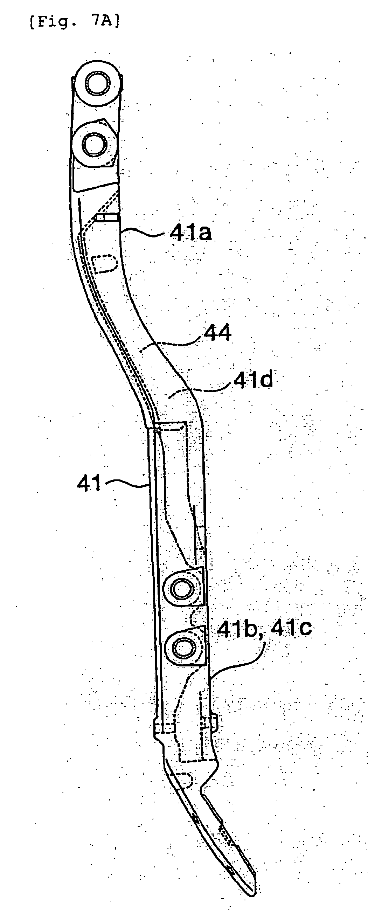

A vertically intermediate part of the front half 41 is formed to have a C-shaped cross section opened toward the rear of the vehicle body as shown in Fig. 7. The part having a C-shaped cross section is denoted by the character 41d in Fig. 7(b). The part 41d having a C-shaped cross section is molded by a die at the time of forging. While not shown, a hose, a lead wire, etc. can be extended through the part 41d having a C-shaped cross section.

That region 41e of the upper part of the front half 41, which corresponds to the exhaust pipe 13 of the cylinder 15 on the front side of the vehicle body, is formed to be small in width in a front and rear direction of the vehicle body as compared with the remaining part as shown in Fig. 5.

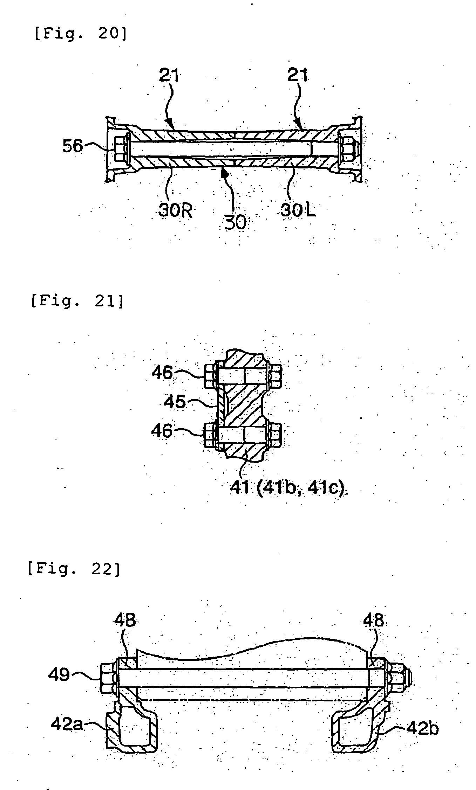

A plate-shaped bracket 45 projecting toward the rear side of the vehicle body is mounted to the lower parts 41b, 41c of the front half 41 by means of mount bolts 46 as shown in Fig. 5, and a front end of the crankcase 14 is connected to the lower parts through the bracket 45 and bolts 47 on a side of the engine 10. Those parts of the lower parts 41b, 41c, to which the bracket 45 is mounted, are formed to be solid as shown in Fig. 21.

A connection between the lower end of the front half 41 and the front end of the rear half 42 adopts a construction, in which the both ends are clamped by joint bolts 43 in a state, in which the rear half 42 overlaps on the front half 41 as shown in Fig. 5.

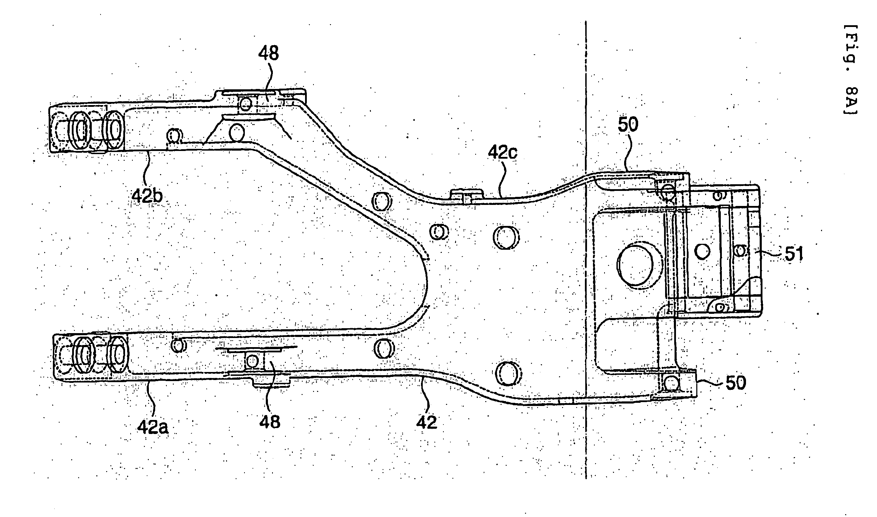

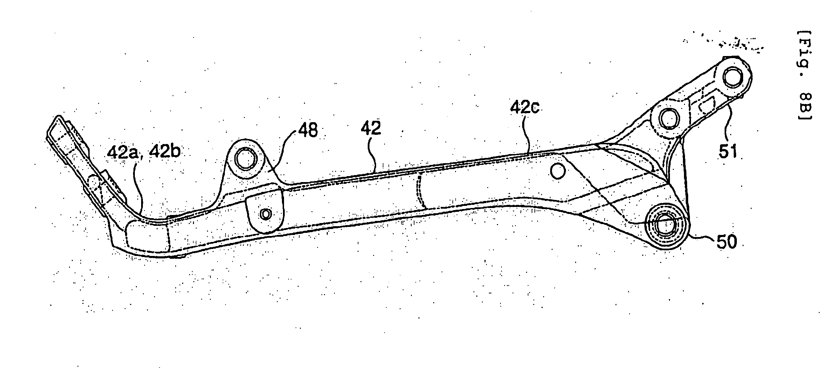

The rear half 42 of the downtube 23 is formed in a bifurcate manner to be opened toward the front of the vehicle body as shown in Fig. 8. In Detail, the rear half 42 comprises a pair of left and right front parts 42a, 42b connected to the front half 41 and a rear part 42c connected to the rear arm bracket 30, which parts are formed integral by means of forging. The front parts 42a, 42b and the rear part 42c are formed to be hollow and communicated internally to each other. The front parts 42a, 42b have a cross sectional shape shown in Fig. 22. The front parts 42a, 42b and the lower parts 41b, 41c of the front half 41 constitute a pair of parts, which separate from each other in the direction of vehicle breadth.

The front parts 42a, 42b are formed on upper surfaces thereof with protrusively extending brackets 48 as shown in Fig. 22 and connected to a front lower end of the crankcase 14 through the brackets 48 and bolts 49 on the side of the engine 10.

Provided on a rear end of the rear part 42c are protrusive brackets 50 for connection to a cushioning unit, and a bracket 51 for connection to the rear arm bracket. The brackets 50 for connection to a cushioning unit are formed in pair on the left and right, and the bracket 51 for connection to the rear arm bracket is formed at the center of the vehicle body in the left and right direction to extend in the front and rear direction and in the left and right direction.

A front end of a rear cushioning unit 52 is pivotally connected to the brackets 50 for connection to a cushioning unit as shown in Fig. 5. A rear end of the rear cushioning unit 52 is connected to a lower projection 54 of the rear arm 12 through a linkage 53.

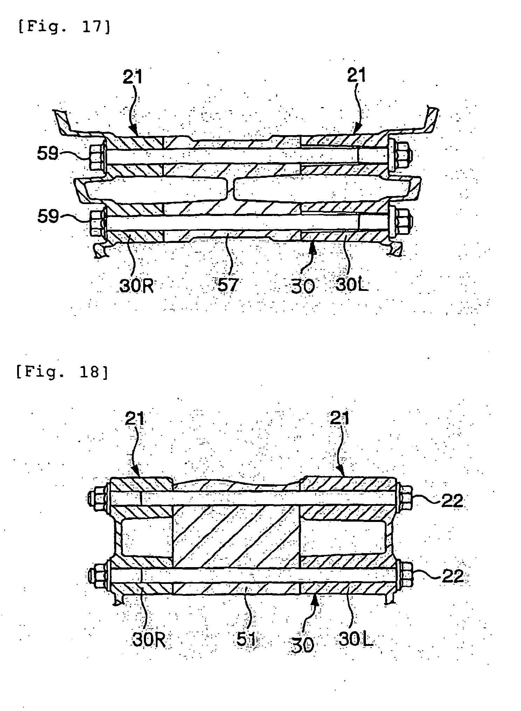

As shown in Fig. 18, the bracket 51 for connection to the rear arm bracket is interposed between the rear arm bracket 30 on the left side of the vehicle body and the rear arm bracket 30 on the right side of the vehicle body and clamped by means of two joint bolts 22, 22, which extend therethrough. That is, a rear end of the rear half 42 of the downtube 23 is interposed between the pair of left and right rear arm brackets 30L, 30R.

Like the main frames 29, the rear arm brackets 30 are formed to have a C-shaped cross section opened toward the center of the vehicle body in the left and right direction and provided therein with a plurality of reinforcement ribs. The rear arm bracket 30 of the main frame member 21 on the left side of the vehicle body and the rear arm bracket 30 of the main frame member 21 on the right side of the vehicle body are joined to each other below and in the vicinity of rear arm supports 55 (see Fig. 5) by means of a joint bolt 56 as shown in Fig. 20. According to the embodiment, a rear wall of the rear arm bracket 30 extends to the center of the vehicle body in the left and right direction to meet with a tip end of a rear wall of the other of the rear arm brackets 30. In other words, the rear wall is formed to define a space rearwardly of the rear arm bracket 30 and a space forwardly thereof. By adopting such construction, heat from the collecting pipe 17 arranged in the rear space is hard to be transmitted to the front space. Therefore, the motorcycle 1 can accommodate, for example, a battery, electronic parts for an exhaust control valve, etc. between the pair of rear arm bracket 30 in a manner to prevent the same from being heated by heat of the collecting pipe 17 (catalyst converter).

Also, a rear end of the crankcase 14 is supported by a support bracket 57 mounted at upper ends of the rear arm brackets 30 and a projection 58 mounted at lower ends thereof as shown in Fig. 5. The support bracket 57 is interposed between the pair of rear arm brackets 30 and clamped by bolts 59, which extend therethrough, as shown in Fig. 17. The support bracket 57 is mounted to the crankcase 14 by a bolt 57a. The projection 58 is clamped to the crankcase 14 by a bolt 60, which extends through the crankcase 14. Therefore, the both rear arm brackets 30 are connected to each other at the engine support through the support bracket 57 and the engine 10.

The rear arm 12 supported by the rear arm brackets 30 comprises, at a front end thereof, the left rear arm body 18 positioned on the left side of the vehicle body and the right rear arm body 19 positioned on the right side of the vehicle body, and rotatably supports the rear wheel 11 at the rear end of the vehicle body as shown in Fig. 19. The rear arm 12 itself adopts the same construction as that of a rear arm used in conventional motorcycles. However, the pair of left and right rear arm bodies 18, 19 of the rear arm 12 are positioned outwardly of the vehicle body from the rear arm brackets 30 and pivotally supported on the rear arm brackets 30 via a pivot shaft 61, which extends therethrough in the left and right direction, and bearings 62 to 66. The pivot shaft 61 extends transversely through mating surfaces 30a of the left and right rear arm brackets 30L, 30R. The pivot shaft 61 constitutes a pivot of the rear arm of an embodiment of the invention. The mating surfaces 30a constitute joint surfaces.

In Fig. 19, the reference numeral 67 at both ends of the pivot shaft 61 denotes brackets that support foot rests 68 (see Figs. 1 to 3) for a driver. Those portions of the rear arm brackets 30, which support the pivot shaft 61, are formed so that mating surfaces of the left and right rear arm brackets 30L, 30R surround a whole periphery of the pivot shaft 61 as shown in Figs. 6 and 19.

Brackets 71, 72 for support of the rear frame are protrusively provided rearwardly of upper ends of the rear arm brackets 30 as shown in Figs. 5 and 6. The brackets 71, 72 are provided in two locations separated vertically, and thus provided in four locations in total on the main frame member 21 on the left side of the vehicle body and the main frame member 21 on the right side of the vehicle body.

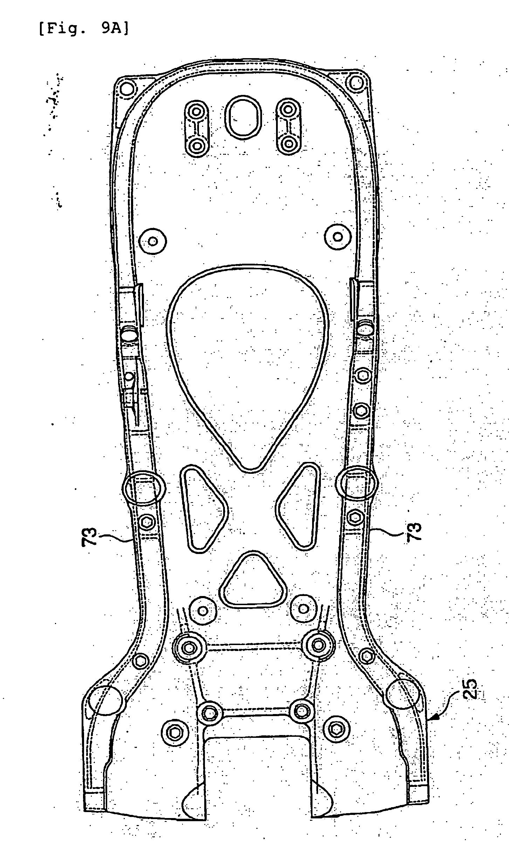

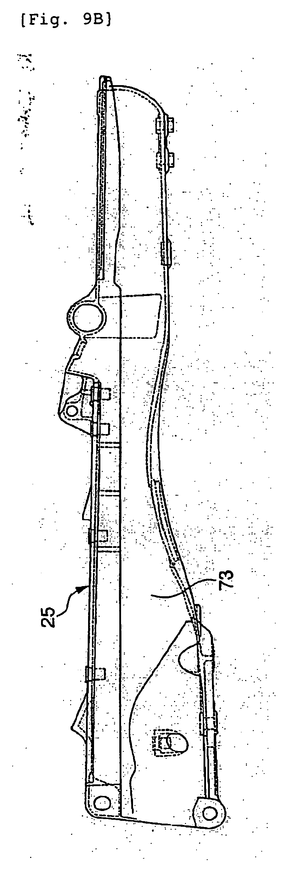

The rear frame 25 mounted to the brackets 71, 72 is formed to assume a shape of a box, which is opened upward and toward the front of the vehicle body and lengthy in the front and rear direction of the vehicle body, and arranged in a state of being inclined above the rear wheel 11 and rearwardly upward as shown in Fig. 9. The muffler covers 3 described later cover the rear frame 25 from both sides thereof and rearwardly and downwardly thereof, and the seat 2 covers the rear frame from above, so that the rear frame is not exposed outside the vehicle body.

A side wall 73 of the rear frame 25 is formed such that a front end thereof mounted to the main frame members 21 is highest. An upper end of the side wall 73 is formed to have a C-shaped cross section opened downward. The seat 2 is supported on the rear frame 25 in a state of being born by an upper surface of the upper end of the side wall 73.

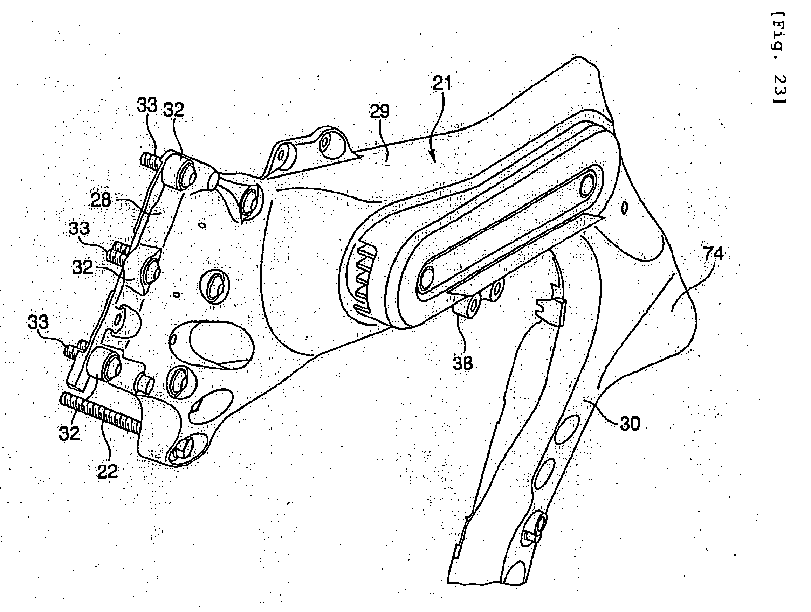

As shown in Figs. 1 and 23, the upper ends of the rear arm brackets 30 are formed to expand laterally of the vehicle body in a configuration of forward extensions of front ends of the muffler covers 3 that extend toward the rear of the vehicle body along the rear frame 25. Expanded portions 74 are semi-conical shaped to project laterally of the vehicle body and open toward the muffler covers 3.

The muffler covers 3 comprise inside covers 81 (see Fig. 3), which cover the rear frame 25 from under, and a pair of left and right outside covers 82 mounted to ends of the inside covers 81 outside the vehicle body. Both sides of the inside covers 81 and the outside covers 82 are formed so as to make cylinders having a circular cross section upon a combination thereof. Silencers (not shown) connected to rear ends of the exhaust pipes 13 are inserted into the cylinders. Also, mounted to rear ends of the cylinders as shown in Figs. 1 to 3 are annular caps 83 and tail pipes 84 projecting rearward from inside the annular caps 83.

The inside covers 81 are supported on the rear frame 2 and the outside covers 82 are supported on the inside covers 81, the rear frame 25, and the rear arm brackets 30 in a state, in which front ends thereof are connected to the expanded portions 74 of the rear arm brackets 30. The front ends of the outside covers 82 are formed so as to cover the brackets 71, 72 for support of the rear frame from above, rearward, and laterally. Also, the front ends of the outside covers 82 are mounted through mount bolts 82a (see Fig. 1) to stays (not shown), which are clamped to the upwardly positioned brackets 71 out of the both brackets 71, 72 together with the rear frame 25. That is, connections of the rear arm brackets 30 and the rear frame 25 are covered from outside by the outside covers 82 so as not to be exposed outside the vehicle body.

With the motorcycle 1 constructed in the above manner, forces from the left rear arm body 18 and the right rear arm body 19 of the rear arm 12 are exerted on the rear arm brackets 30L, 30R in a manner to twist the same with the front and rear direction of the vehicle body as a central line at the time of, for example, cornering. The forces in a direction of twist are transmitted to the rear arm brackets 30L, 30R through the bearings 62 to 66 and the pivot shaft 61 from the left rear arm body 18 and the right rear arm body 19 of the rear arm 12.

With the motorcycle 1 according to the embodiment, the left rear arm body 18 and the right rear arm body 19 of the rear arm 12 are positioned outside the rear arm brackets 30. Therefore, with the motorcycle 1 according to the embodiment, a direct joint part of the left and right rear arm brackets 30L, 30R can be arranged close to a rear arm pivot to enhance the neighborhood of the pivot in stiffness as compared with the case where rear arm brackets are positioned outside the left rear arm body 18 and the right rear arm body 19.

Accordingly, with the motorcycle 1, the rear arm 12 can be firmly supported in spite of adopting a construction, in which the pair of left and right rear arm brackets 30 are joined to each other by bolts (for example, the joint bolt 56 as shown in Fig. 20 and the bolts 59, 60 on the engine support). Therefore, the motorcycle 1 can be held down in manufacturing cost by formation of the rear arm brackets 30 by means of casting. Besides, the motorcycle 1 can make the vehicle body frame 8 lightweight since the rear arm 12 is firmly supported on the vehicle body frame 8 even when the vehicle body frame 8 is formed to be small in thickness and less reinforcement members are used.

With the motorcycle 1 according to the embodiment, the left and right rear arm brackets 30L, 30R are directly joined to each other in the vicinity of the pivot shaft 61 of the rear arm 12, so that the rear arm 12 can be enhanced in support stiffness.

Also, with the motorcycle 1 according to the embodiment, the mating surfaces of the left and right rear arm brackets 30 are formed to surround a periphery of the pivot shaft 61 of the rear arm 12, so that the rear arm 12 can be enhanced in support stiffness. By adopting a construction, in which the mating surfaces of the left and right rear arm brackets surround a whole periphery of the pivot shaft of the rear arm as in the embodiment, it is possible to further enhance the support stiffness.

With the motorcycle 1 according to the embodiment, the pivot shaft 16 of the rear arm 12 is formed to cross the mating surfaces of the left and right rear arm brackets 30. Therefore, a load attributable to input from a side of the rear arm 12 and tending to shift the mating surfaces from each other is lessened by the pivot shaft. Accordingly, with the motorcycle 1 according to the embodiment, the mating surfaces of the rear arm brackets 30 are hard to shift from each other, thus enabling firmly supporting the rear arm 12.

With the motorcycle 1 according to the embodiment, the head pipe half 28 is formed integral with the left rear arm bracket 30 and the right rear arm bracket 30 while a head pipe can be formed integral with at least one of the rear arm brackets 30 in a motorcycle of an embodiment of the invention. That is, it is possible to form a head pipe integral with one of the rear arm brackets 30 to constitute a frame member and to connect the other of the rear arm brackets 30 to the frame member. Also, in this case, the head pipe can be formed integrally to be tubular, and can be formed to be divided into a left half and a right half.

With the motorcycle 1 according to the embodiment, the pair of main frame members 21 extending from the head pipe 31 to the rear arm brackets 30 can be formed without welding, so that it is possible to inexpensively provide a motorcycle having a high running performance.

With the motorcycle 1 according to the embodiment, the left rear arm bracket 30 and the right rear arm bracket 30, respectively, are provided with a pair of left and right frame members (the main frame 29), which extend to the head pipe 31. Also, the frame members are formed to separate from each other in the left and right direction of the vehicle body from the vicinity of and rearwardly of the head pipe part. Therefore, with the motorcycle 1, it is possible to connect the engine 10 to the pair of left and right main frame members 21, 21 to have the engine 10 functioning as a cross member for reinforcement. Accordingly, while a construction is adopted, in which the pair of left and right main frame members 21, 21 are joined to each other by means of bolts, it is possible to enhance the vehicle body frame 8 in stiffness.

With the motorcycle 1 according to the embodiment, the downtube 23 is joined to the lower end of the head pipe half 28 of the main frame member 21 and the lower end of the rear arm bracket 30 by means of joint bolts 22 and the lower end of the head pipe half 28 and the lower end of the rear arm bracket 30 are connected to each other through the downtube 23. Therefore, it is possible in the motorcycle 1 to reinforce the pair of left and right main frame members 21, 21 with the downtube 23.

With the motorcycle 1 according to the embodiment, both ends of the downtube 23 are interposed between the main frame member 21 on the left side of the vehicle body and the main frame member 21 on the right side of the vehicle body, so that the downtube 23 functions as a cross member interposed between the pair of left and right main frame members 21. Therefore, although a construction is adopted, in which the pair of left and right main frame members 21, 21 are joined to each other by means of joint bolts 22 to form the vehicle body frame 8, it is possible to form the vehicle body frame 8 having a high stiffness.

With the motorcycle 1 according to the embodiment, the front half 41 of the downtube 23 extending vertically in front of the engine 10 is formed by means of forging, the rear half 42 of the downtube 23 extending longitudinally below the engine 10 is formed by means of casting, and the halves are joined to each other by means of joint bolts 43. Therefore, since the front half 41 of the downtube 23 can be formed to have a high stiffness and a plurality of brackets 48, 50 for mounting of the lower end of the engine 10 and the rear cushioning unit 52 can be easily formed on the rear half 42 of the downtube 23.

Accordingly, the embodiment is adopted to enable achieving an improvement of the vehicle body frame 8 in stiffness and reduction in cost. In addition, the front half 41 of the downtube 23 can also be formed by means of casting, and the rear half 42 can also be formed by means of forging. In case of adopting such construction, it is desirable to form brackets or the like mostly on the front half 41.

Also, with the motorcycle 1 according to the embodiment, the front half 41 of the downtube 23 is formed by means of forging, so that the front half 41 can posses stiffness, and running is made stable.

With the downtube 23 of the motorcycle 1 according to the embodiment, the pair of parts (41b, 41c, 42a, 42b), which separate from each other in the direction of vehicle breadth, are formed while the lower end of the head pipe 31 and the rear, lower end of the rear arm bracket 30 are connected together, and the engine 10 is supported on the pair of parts, so that the engine 10 can be firmly supported by the pair of wide parts.

With the motorcycle 1 according to the embodiment, a piping guide part 44 having a C-shaped cross section and opened toward the rear of the vehicle body is formed on the front half 41 of the downtube 23, which is manufactured by forging, so that the front half 41 of the downtube 23 can be formed lightweight while having a high strength. Besides, by passing a hose, a lead wire, etc. through that part of the front half 41, which has a C-shaped cross section, pebbles or the like, which is repelled by the front wheel 4, can be prevented from striking against these elements.

With the motorcycle 1 according to the embodiment, that region of the upper part of the downtube 23, which corresponds to the exhaust pipe 13 of the engine 10, is formed to be small in width in the front and rear direction as compared with the remaining part. Therefore, the front half 41 can be prevented from interfering with the exhaust pipe 13 while the front half 41 of the downtube 23 is formed to extend vertically in front of the engine 10. Accordingly, it is possible in the motorcycle 1 to bend and form the exhaust pipe 13 with an ideal curvature, thus enabling reducing the engine 10 in exhaust resistance.

With the motorcycle 1 according to the embodiment, the downtube 23 is formed to have a shape along a lateral shape of the front surface of the engine 10, so that it is possible to position the head pipe 31 in a position close to the engine 10. Therefore, the motorcycle 1 makes it possible to form and make a wheel base short as compared with conventional motorcycles.

Also, with the motorcycle 1, front ends of the muffler covers 3 are connected to the expanded portions 74 of the rear arm brackets 30, so that a part of the vehicle body frame 8 is made use of to enable making the muffler covers 3 conspicuous.

While the rear arm bracket 30 of the motorcycle 1 according to the embodiment is formed integral with the head pipe half 28, a rear arm bracket in a motorcycle according to an embodiment of the invention can be formed separately from other frame members. In this case, it is possible to adopt a construction, in which, for example, a head pipe part is fixed to an upper part of a front side of an engine by means of bolts and a rear arm bracket is fixed to a rear end of the engine by means of bolts.

While the rear arm 12 of the motorcycle 1 according to the embodiment adopts a construction, in which the rear wheel 11 is supported by the pair of left and right main arms, it is possible in a motorcycle according to an embodiment of the invention to use a rear arm constructed such that one of a pair of left and right main arms supports a rear wheel in a cantilever-like manner.

An embodiment of the invention can apply to a motorcycle, in which a vehicle body frame is formed and divided into a half on a left side of a vehicle body and a half on a right side of the vehicle body.

## Claims

1. A motorcycle (1) comprising:
a vehicle body frame (8) comprising rear arm brackets (30) comprising a left rear arm bracket (30L) and a right rear arm bracket (30R), the left rear arm bracket and the right rear arm bracket being clamped together at respective mating surfaces by at least one clamp member,
a left rear arm body (18) pivotally supported on the left rear arm bracket,
a right rear arm body (19) pivotally supported on the right rear arm bracket, and
a pivot shaft (61) supported by the left rear arm bracket and the right rear arm bracket to journal the left rear arm body and the right rear arm body,
**characterised in that** the left rear arm body (18) is arranged outside the left rear arm bracket (30L) in a direction of vehicle breadth,
the right rear arm body (19) is arranged outside the right rear arm bracket (30R) in the direction of vehicle breadth; and
the left rear arm bracket (30L) and the right rear arm bracket (30R) are joined together in the vicinity of the pivot shaft (61).

2. The motorcycle according to claim 1, wherein the mating surfaces of the left rear arm bracket (30L) and the right rear arm bracket (30R) surround a periphery of the pivot shaft (61) that journals the left rear arm body (18) and the right rear arm body (19).

3. The motorcycle according to claim 2, wherein the mating surfaces surround a whole periphery of the pivot shaft (61) that journals the left rear arm body (18) and the right rear arm body (19).

4. The motorcycle according to claim 1, wherein the pivot shaft (61) crosses the mating surfaces of the left rear arm bracket (30L) and the right rear arm bracket (30R).

5. The motorcycle according to any one of the preceding claims, wherein the pivot shaft (61) comprises the clamp member.

6. The motorcycle according to any one of the preceding claims, wherein the clamp member comprises a bolt.

7. The motorcycle according to any preceding claim, further comprising a head pipe (31) that supports a front fork, and
wherein the head pipe (31) is integrally casted on a front end of at least one of the left rear arm bracket (30L) and the right rear arm bracket (30R).

8. The motorcycle according to claim 7, wherein the head pipe (31) comprises a left head pipe half on a left side in the direction of vehicle breadth, and
a right head pipe half on a right side in the direction of vehicle breadth.

9. The motorcycle according to claim 7 or claim 8, further comprising an engine (10); and
wherein the left rear arm bracket (30L) and the right rear arm bracket (30R), respectively, comprise a pair of left and right frame members extending to the head pipe,
the pair of left and right frame members are formed to separate right and left rearwardly of the head pipe (31), and
the engine (10) is connected between the pair of left and right frame members to be bridged therebetween.

10. The motorcycle according to any one of claims 5 to 9, further comprising a downtube (23) connected to a lower end of the head pipe and rear, lower ends of the rear arm brackets (30).

11. The motorcycle according to claim 10, wherein both ends of the downtube (23) are interposed between the left frame member and the right frame member.

12. The motorcycle according to claim 11, wherein the downtube (23) comprises a front half (41) extending vertically in front of an engine (10),
and a rear half (42) extending longitudinally below the engine (10), and
wherein one of the front half (41) and the rear half (42) is formed by forging, and the other is formed by casting.

13. The motorcycle according to claim 12, wherein the front half (41) of the downtube (23) is formed by forging, and the rear half (42) is formed by casting.

14. The motorcycle according to any one of claims 11 to 13, wherein the downtube (23) forms a pair of parts (41b, 41c, 42a, 42b), which separate from each other in a direction of vehicle breadth, while the lower end of the head pipe (31) and the rear, lower ends of the rear arm brackets (30), and
the pair of parts support an engine (10).

15. The motorcycle according to any one of claims 11 to 14, wherein the downtube (23) comprises a front half (41) extending vertically in front of an engine (10),
and a rear half (42) extending longitudinally below the engine (10), and
wherein the front half (41) is formed by casting to include a part having a C-shaped cross section opened toward the rear of the vehicle body.

16. The motorcycle according to any one of claims 11 to 15, further comprising an exhaust pipe (13) extending forward from an engine (10), and
wherein the downtube (23) is formed so that that part thereof the downtube (23), which corresponds to the exhaust pipe (13) is small in width in a front and rear direction of the vehicle body as compared with the remaining part.

## Patentansprüche

1. Motorrad (1), das aufweist:
Fahrzeugkarosserierahmen (8) umfassend hintere Rahmenträger (30), die einen linken hinteren Rahmenträger (30L) und einen rechten hinteren Rahmenträger (30R) umfassen, wobei der linke hintere Rahmenträger und der rechte hintere Rahmenträger an den jeweiligen Berührungsflächen durch mindestens ein Klemmelement gespannt sind,
eine linkes hinteres Rahmenteil (18) schwenkbar gelagert am linken hinteren Rahmenträger,
ein rechtes hinteres Rahmenteil (19) schwenkbar gelagert am rechten hinteren Rahmenträger, und
eine Schwenkachse (61) gelagert durch den linken hinteren Rahmenträger und den rechten hinteren Rahmenträger, die durch das linke hintere Rahmenteil und das rechte hintere Rahmenteil durchgeführt wird,
**dadurch gekennzeichnet, dass**
das linke hintere Rahmenteil (18) außen am linken hinteren Rahmenträger (30L) in Richtung der Fahrzeugbreite angeordnet ist,
das rechte hintere Rahmenteil (19) außen am rechten hinteren Rahmenträger (30R) in Richtung der Fahrzeugbreite angeordnet ist, und
der linke hintere Rahmenträger (30L) und der rechte hintere Rahmenträger (30R) in der Nähe der Schwenkachse (61) zusammengefügt sind.

2. Motorrad nach Anspruch 1, wobei die Berührungsflächen des linken hinteren Rahmenträgers (30L) und des rechten hinteren Rahmenträgers (30R) einen Umfang der Schwenkachse (61) umschließen, die durch das linke hintere Rahmenteil (18) und das rechte hintere Rahmenteil (19) durchgeführt wird.

3. Motorrad nach Anspruch 2, wobei die Berührungsflächen einen Gesamtumfang der Schwenkachse (61) umschließen, die durch das linke hintere Rahmenteil (18) und das rechte hintere Rahmenteil (19) durchgeführt wird.

4. Motorrad nach Anspruch 1, wobei die Schwenkachse (61) quer zu den Berührungsflächen des linken hinteren Rahmenträgers (30L) und des rechten hinteren Rahmenträgers (30R) liegt.

5. Motorrad nach einem der vorhergehenden Ansprüche, wobei die Schwenkachse (61) das Klemmelement umfasst.

6. Motorrad nach einem der vorhergehenden Ansprüche, wobei das Klemmelement eine Schraube umfasst.

7. Motorrad nach einem der vorhergehenden Ansprüche, wobei es darüber hinaus ein Kopfrohr (31) umfasst, das eine Vordergabel stützt, und
wobei das Kopfrohr (31) an einem vorderen Ende von mindestens einem linken hinteren Rahmenträger (30L) und einem rechten hinteren Rahmenträger (30R) angegossen ist.

8. Motorrad nach Anspruch 7, wobei das Kopfrohr (31) eine linke Kopfrohrhälfte auf der linken Seite in Richtung der Fahrzeugbreite umfasst, und
eine rechte Kopfrohrhälfte auf der rechten Seite in Richtung der Fahrzeugbreite umfasst.

9. Motorrad nach Anspruch 7 oder 8, wobei es darüber hinaus einen Motor (10) umfasst, und
wobei der linke hintere Rahmenträger (30L) und der rechte hintere Rahmenträger (30R) jeweils ein Paar linke und rechte Rahmenelemente aufweisen, die sich bis zu dem Kopfrohr erstrecken,
die Paare der linken und rechten Rahmenelemente so ausgestaltet sind, dass sie rechts und links hinter dem Kopfrohr (31) getrennt sind, und
der Motor (10) zwischen dem Paar der linken und rechten Rahmenelemente angeschlossen ist, um so dazwischen eine Brücke zu bilden.

10. Motorrad nach einem der Ansprüche 5 bis 9, wobei es darüber hinaus ein unteres Rahmenrohr (23) umfasst, das mit dem unteren Ende des Kopfrohrs und den hinteren, unteren Enden der hinteren Rahmenträger (30) verbunden ist.

11. Motorrad nach Anspruch 10, wobei beide Enden des unteren Rahmenrohrs (23) zwischen dem linken Rahmenelement und dem rechten Rahmenelement eingefügt sind.

12. Motorrad nach Anspruch 11, wobei das untere Rahmenrohr (23) aufweist eine vordere Hälfte (41), die sich vertikal vor einem Motor (10) erstreckt,
und eine hintere Hälfte (42), die sich in Längsrichtung unter dem Motor (10) erstreckt, und
wobei eine der vorderen Hälfte (41) und der hinteren Hälfte (42) durch Schmieden geformt ist und die andere durch Gießen geformt ist.

13. Motorrad nach Anspruch 12, wobei die vordere Hälfte (41) des unteren Rahmenrohrs (23) durch Schmieden geformt ist, und die hintere Hälfte (42) durch Gießen geformt ist.

14. Motorrad nach einem der Ansprüche 11 bis 13, wobei das untere Rahmenrohr (23) ein Teilepaar (41b, 41c, 42a, 42b) bildet, das in Richtung der Fahrzeugbreite voneinander getrennt ist, während das untere Ende des Kopfrohrs (31) und die hinteren, unteren Enden der hinteren Rahmenträger (30), und
das Teilepaar einen Motor (10) stützen.

15. Motorrad nach einem der Ansprüche 11 bis 14, wobei das untere Rahmenrohr (23) aufweist eine vordere Hälfte (41), die sich vertikal vor einem Motor (10) erstreckt,
und eine hintere Hälfte (42), die sich in Längsrichtung unter dem Motor (10) erstreckt, und
wobei die vordere Hälfte (41) durch Gießen geformt ist, um ein Teil mit einem C-förmigen Querschnitt einzuschließen, der zum hinteren Ende des Fahrzeugaufbaus geöffnet ist.

16. Motorrad nach einem der Ansprüche 11 bis 15, wobei es darüber hinaus ein Auspuffrohr (13) umfasst, das sich vor einem Motor (10) erstreckt, und
wobei das untere Rahmenrohr (23) so ausgestaltet ist, dass ein Teil des unteren Rahmenrohrs (23), das dem Auspuffrohr (13) entspricht, im Vergleich zu den übrigen Teilen eine schmale Breite in Vorwärts- und Rückwärtsrichtung des Fahrzeugaufbaus aufweist.

## Revendications

1. Motocycle (1) comprenant :
une structure de châssis de véhicule (8) comprenant des supports de bras arrière (30) comprenant un support de bras arrière gauche (30L) et un support de bras arrière droit (30R), le support de bras arrière gauche et le support de bras arrière droit étant serrés ensemble au niveau de surfaces de contact respectives par au moins un élément de serrage,
un corps de bras arrière gauche (18) supporté de manière pivotante sur le support de bras arrière gauche,
un corps de bras arrière droit (19) supporté de manière pivotante sur le support de bras arrière droit, et
un arbre de pivotement (61) supporté par le support de bras arrière gauche et le support de bras arrière droit pour guider en rotation le corps de bras arrière gauche et le corps de bras arrière droit,
**caractérisé en ce que** le corps de bras arrière gauche (18) est agencé à l'extérieur du support de bras arrière gauche (30L) dans une direction de largeur du véhicule,
le corps de bras arrière droit (19) est agencé à l'extérieur du support de bras arrière droit (30R) dans une direction de largeur du véhicule ; et
le support de bras arrière gauche (30L) et le support de bras arrière droit (30R) sont assemblés ensemble à proximité de l'arbre de pivotement (61).

2. Motocycle selon la revendication 1, dans lequel les surfaces de contact du support de bras arrière gauche (30L) et du support de bras arrière droit (30R) entourent une périphérie de l'arbre de pivotement (61) qui guide en rotation le corps de bras arrière gauche (18) et le corps de bras arrière droit (19).

3. Motocycle selon la revendication 2, dans lequel les surfaces de contact entourent une périphérie totale de l'arbre de pivotement (61) qui guide en rotation le corps de bras arrière gauche (18) et le corps de bras arrière droit (19).

4. Motocycle selon la revendication 1, dans lequel l'arbre de pivotement (61) coupe les surfaces de contact du support de bras arrière gauche (30L) et du support de bras arrière droit (30R).

5. Motocycle selon l'une quelconque des revendications précédentes, dans lequel l'arbre de pivotement (61) comprend l'élément de serrage.

6. Motocycle selon l'une quelconque des revendications précédentes, dans lequel l'élément de serrage comprend un boulon.

7. Motocycle selon l'une quelconque des revendications précédentes, comprenant en outre un tube de tête (31) qui supporte une fourche avant, et
dans lequel le tube de tête (31) est coulé de manière à être intégrée sur une extrémité avant d'au moins un du support de bras arrière gauche (30L) et du support de bras arrière droit (30R).

8. Motocycle selon la revendication 7, dans lequel le tube de tête (31) comprend une moitié gauche de tube de tête d'un côté gauche dans la direction de largeur du véhicule, et
une moitié droite de tube de tête d'un côté droit dans la direction de largeur du véhicule.

9. Motocycle selon la revendication 7 ou 8, comprenant en outre un moteur (10), et dans lequel le support de bras arrière gauche (30L) et le support de bras arrière droit (30R) comprennent respectivement une paire d'éléments de structure gauche et droit s'étendant jusqu'au tube de tête,
la paire d'éléments de structure gauche et droit sont formés pour séparer droite et gauche vers l'arrière du tube de tête (31), et
le moteur (10) est relié entre la paire d'éléments de structure gauche et droit pour être enjambé entre celles-ci.

10. Motocycle selon l'une quelconque des revendications 5 à 9, comprenant en outre un tube inférieur (23) relié à une extrémité inférieure du tube de tête et aux extrémités inférieures arrière des supports de bras arrière (30).

11. Motocycle selon la revendication 10, dans lequel les deux extrémités du tube inférieur (23) sont interposées entre l'élément de structure gauche et l'élément de structure droit.

12. Motocycle selon la revendication 11, dans lequel le tube inférieur (23) comprend une moitié avant (41) s'étendant verticalement devant un moteur (10),
et une moitié arrière (42) s'étendant longitudinalement sous le moteur (10), et
dans lequel une de la moitié avant (41) et de la moitié arrière (42) est formée par forgeage et l'autre est formée par coulage.

13. Motocycle selon la revendication 12, dans lequel la moitié avant (41) du tube inférieur (23) est formée par forgeage et la moitié arrière (42) est formée par coulage.

14. Motocycle selon l'une quelconque des revendications 11 à 13, dans lequel le tube inférieur (23) forme une paire de parties (41b, 41c, 42a, 42b) qui se séparent l'une de l'autre dans une direction de largeur du véhicule, alors que l'extrémité inférieure du tube de tête (31) et les extrémités inférieures arrière des supports de bras arrière (30), et
la paire de parties supporte un moteur (10).

15. Motocycle selon l'une quelconque des revendications 11 à 14, dans lequel le tube inférieur (23) comprend une moitié avant (41) s'étendant verticalement devant un moteur (10),
et une moitié arrière (42) s'étendant longitudinalement sous le moteur (10), et
dans lequel la moitié avant (41) est formée par coulage pour comprendre une partie ayant une section transversale en C ouverte vers l'arrière du châssis du véhicule.

16. Motocycle selon l'une quelconque des revendications 11 à 15, comprenant en outre un tuyau d'échappement (13) s'étendant vers l'avant depuis un moteur (10), et dans lequel le tube inférieur (23) est formé de sorte que la partie du tube inférieur (23) qui correspond au tuyau d'échappement (13) soit de largeur réduite dans une direction avant et arrière du châssis de véhicule en comparaison avec la partie restante.
